# EUROPEAN PATENT APPLICATION

(11) **EP 3 664 184 A1**
(43) Date of publication of application: **10.06.2020**
(21) Application number: 18840694.6
(22) Date of filing: 27.07.2018
(51) Int. Cl.: H01M 2/10, B25F 5/00, H02J 7/00

(54) **ELECTRIC DEVICE**

(30) Priority: 03.08.2017 JP 2017150520
(71) Applicant: Koki Holdings Co., Ltd., Tokyo 108-6020 (JP)
(72) Inventor: TAKEUCHI Shota, Hitachinaka-City Ibaraki 312-8502 (JP); TERANISHI Takuya, Hitachinaka-City Ibaraki 312-8502 (JP); OGURA Masayuki, Hitachinaka-City Ibaraki 312-8502 (JP); FUNABIKI Yusuke, Hitachinaka-City Ibaraki 312-8502 (JP); TOUKAIRIN Junichi, Hitachinaka-City Ibaraki 312-8502 (JP)
(74) Representative: Parker, Andrew James
(86) International application number: PCT/JP2018/028257
(87) International publication number: WO 2019/026792

(57) **Abstract**

An electric device capable of suppressing the short circuit between adjacent terminals is provided. The electric device includes a battery pack 25 in which a plurality of battery-side terminals are provided and a device body 11 in which device-side terminals are provided and to which the battery pack 25 is detachably attached. One of the battery-side terminals and the device-side terminals are plate terminals 41 to 47 protruding from a terminal holder 40, and the other of the battery-side terminals and the device-side terminals are connection terminals 51 to 56 which protrude into slots 49 in which the plate terminals 41 to 44, 46, and 47 are inserted and come into contact with the plate terminals. An insulating portion 60 extending from the terminal holder 40 toward a tip of the plate terminal and inserted into the slot 49 is provided to at least one of the plate terminals.

## Description

### TECHNICAL FIELD

The present invention relates to an electric device including a battery pack and a device body to which the battery pack is attached and power from the battery pack is supplied.

### BACKGROUND ART

A portable or mobile electric device includes a storage battery, that is, a battery pack provided with a plurality of battery cells and a case that houses the battery cells, and the device body is driven by the power supplied from the battery pack. Examples of the portable electric device include power tools such as a drill, an impact driver, an impact wrench, and a circular saw. As described in Patent Document 1, an impact driver as a power tool includes a tool body as a device body provided with a battery attachment unit and a battery pack detachably attached to the battery attachment unit.

The battery attachment unit of the device body is provided with a plurality of device-side terminals, and the battery pack is provided with battery-side power supply terminals to be connected to the device-side terminals. When the battery pack is attached to the battery attachment unit, the battery-side power supply terminals are connected to the device-side terminals, so that power can be supplied to the tool body from the battery pack.

### RELATED ART DOCUMENTS

### PATENT DOCUMENTS

Patent Document 1: Japanese Patent Application Laid-Open Publication No. 2014-37018

### SUMMARY OF THE INVENTION

### PROBLEM TO BE SOLVED BY THE INVENTION

As the device-side terminals and the battery-side terminals, an abnormal signal terminal for communicating an abnormal signal from the battery pack to the device body when an overcurrent equal to or more than a predetermined value flows to the device side is provided in addition to the power supply terminal. Further, an electric device in which a plurality of communication terminals are provided on the device side and the battery side in order to communicate information of the battery pack to the device body or information of the device body to the battery pack has been developed. For example, it is conceivable that a temperature sensor terminal for communicating the temperature of the battery cell in the battery pack to the device body, a voltage sensor terminal for communicating the output voltage from the battery pack to the device body, and a type-detection sensor terminal for communicating the type of battery to the device body are provided in the electric device.

When the number of terminals increases in order to transmit and receive information between the battery pack and the device body as described above, the distance between terminals must be shortened because the size of the battery attachment unit of the device body and the battery pack cannot be increased. Therefore, if metal powder or the like accumulates between the battery attachment unit and the battery pack, there is a possibility that the adjacent terminals may be short-circuited.

An object of the present invention is to provide the electric device capable of suppressing the short circuit between adjacent terminals.

### MEANS FOR SOLVING THE PROBLEMS

An electric device of the present invention includes a battery pack in which a plurality of battery-side terminals are provided and a device body in which a plurality of device-side terminals connected to the battery-side terminals are provided and to which the battery pack is detachably attached, one of the battery-side terminals and the device-side terminals are plate terminals protruding from a terminal holder, the other of the battery-side terminals and the device-side terminals are connection terminals which protrude into slots in which the plate terminals are inserted and come into contact with the plate terminals, and an insulating portion extending from the terminal holder toward a tip of the plate terminal and inserted into the slot is provided to at least one of the plate terminals.

### EFFECTS OF THE INVENTION

Since the insulating portion is provided to the plate terminal, an opening end of the slot is closed by the insulating portion when the battery pack is attached to the device body and the plate terminal is inserted into the slot. Consequently, even if a large number of plate terminals are provided in the terminal holder and the distance between the adjacent plate terminals is shortened, it is possible to suppress metal powder or the like entering from the outside from being accumulated on the terminal holder, and it is thus possible to suppress the plurality of adjacent plate terminals from being electrically short-circuited.

Moreover, when the plate terminal is a communication terminal used to transmit information of the battery pack to the device body, the electrical connection between the communication plate terminal and another plate terminal is avoided. On the other hand, when the plate terminal is a power supply terminal, the electrical connection between the power supply plate terminal and another plate terminal is avoided. Consequently, the reliability of the information communication from the battery pack to the device body can be improved, and the power can be stably supplied to the device body.

### BRIEF DESCRIPTION OF THE DRAWINGS

FIG. 1 is a partially cutaway side view of an impact driver as an example of an electric device;
FIG. 2 is a bottom view showing a battery attachment unit provided in a device body of the impact driver according to an embodiment;
FIG. 3 is a perspective view showing the battery attachment unit shown in FIG. 2;
FIG. 4 is a front view of the battery attachment unit seen from a right side of FIG. 2;
FIG. 5 is a plan view of a battery pack to be attached to the battery attachment unit shown in FIG. 2;
FIG. 6 is a perspective view of the battery pack shown in FIG. 5;
FIG. 7 is a cross-sectional view showing a connection state between terminals of the battery attachment unit and terminals of the battery pack;
FIG. 8 is a cross-sectional view showing a connection state between terminals of the battery attachment unit and terminals of the battery pack according to a modification;
FIG. 9 is a bottom view showing a battery attachment unit according to another embodiment; and
FIG. 10 is a plan view showing a battery pack to be attached to the battery attachment unit of FIG. 9.

### DETAILED DESCRIPTION OF PREFERRED EMBODIMENTS

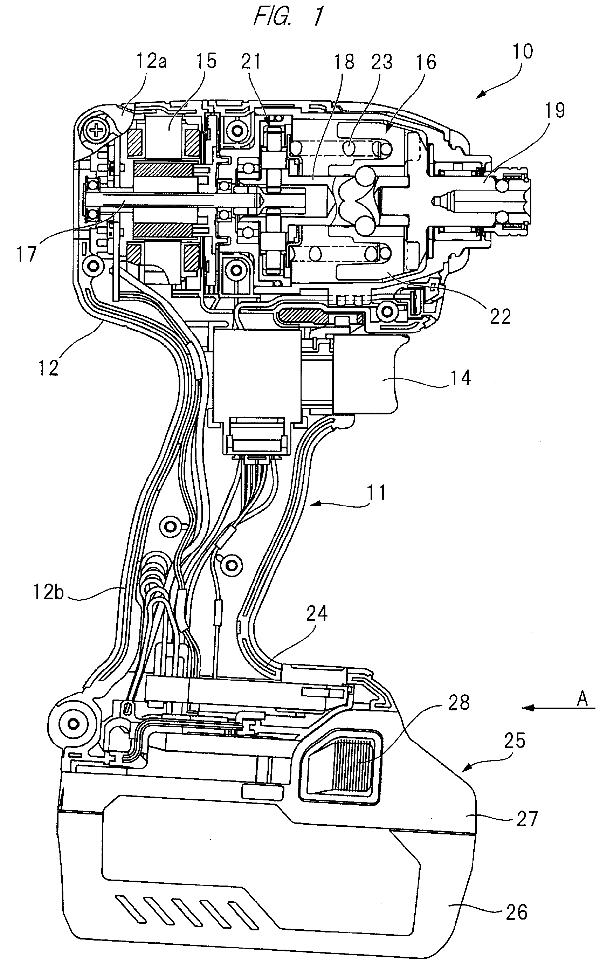

Hereinafter, embodiments of the present invention will be described in detail with reference to the drawings. FIG. 1 shows an impact driver 10 as an example of an electric device. The impact driver 10 includes a tool body, that is, a device body 11, and is used for performing screw tightening work on a screw member by a socket as a work tool. The device body 11 has a resin housing 12, and the housing 12 is assembled by joining two right and left housing pieces and is provided with a drive unit case 12a in which a work tool driving mechanism is incorporated and a handle unit 12b integrated with the driver unit case 12a and gripped by a worker. A trigger 14 is provided on the handle unit 12b. An electric motor 15 is incorporated on the rear side of the drive unit case 12a, and an impact mechanism 16 is incorporated on the front side. In front of an output shaft 17 of the electric motor 15, a spindle 18 is arranged coaxially with the output shaft 17, and an anvil 19 is rotatably supported in front of the spindle 18. A socket as a work tool (not shown) is detachably attached to the anvil 19. The rotation of the output shaft 17 is decelerated by a planetary gear reduction mechanism 21 and is transmitted to the spindle 18.

A cylindrical hammer 22 is mounted on the outside of the spindle 18 so as to be movable in the axial direction. The tip of the hammer 22 meshes with the anvil 19, and the anvil 19 is driven to rotate by the hammer 22. The hammer 22 can reciprocate in the axial direction with respect to the spindle 18, and the hammer 22 strikes the anvil 19 by the axial movement of the hammer 22 by the spring force of a compression coil spring 23 and the rotation of the hammer 22 by the spindle 18. As described above, the impact driver 10 repeatedly strikes the work tool attached to the anvil 19 by the axial movement and rotation of the hammer 22, thereby performing the tightening work on a driven member such as a bolt while continuously applying the striking torque.

In order to supply power to the electric motor 15 and the like of the device body 11, a battery attachment unit 24 is provided in the housing 12, and the battery attachment unit 24 constitutes the device body 11. A battery pack 25 as a power supply device is detachably attached to the battery attachment unit 24. When the battery pack 25 is attached to the device body 11, power can be supplied to the device body 11 of the impact driver 10. When the impact driver 10 is in an upright state in the up-down direction as shown in FIG. 1, the battery attachment unit 24 is positioned at the lower end portion of the impact driver 10, and the battery pack 25 is attached to the horizontal lower surface of the battery attachment unit 24.

If the right side of the battery attachment unit 24 in FIG. 1 is defined as a front side, the battery pack 25 is attached by moving it from the front side toward a rear end portion with respect to the battery attachment unit 24 as indicated by an arrow A in FIG. 1. Based on the moving direction when attaching the battery pack 25, the right end portion of the battery attachment unit 24 which is the portion where the attachment to the battery attachment unit 24 is started is defined as the front end portion, and the left end portion thereof is defined as the rear end portion. Also for the battery pack 25, the right end portion in FIG. 1 is defined as the front end portion, and the left end portion thereof is defined as the rear end portion. The battery pack 25 includes a resin battery pack body 26 in which a plurality of battery cells are housed and a resin attachment/detachment part 27 assembled to the battery pack body 26, and the attachment/detachment part 27 covers a cell case in which the battery cells are housed. When the trigger 14 is operated, the power of the battery pack 25 is supplied to the electric motor 15 and the tightening work by the impact driver 10 can be performed. As described above, the impact driver 10 as an electric device is configured by the device body 11 and the battery pack 25 as a power supply device.

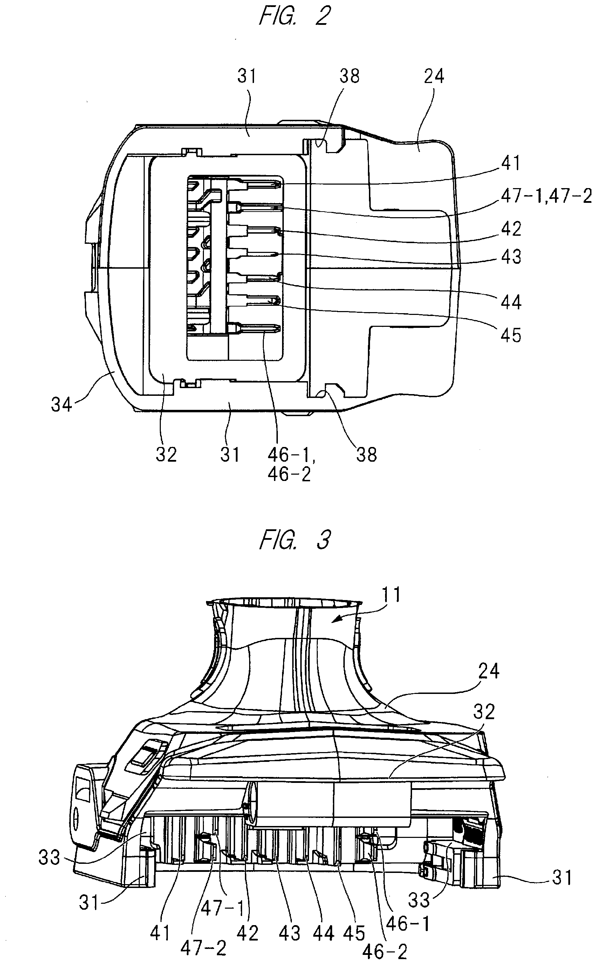

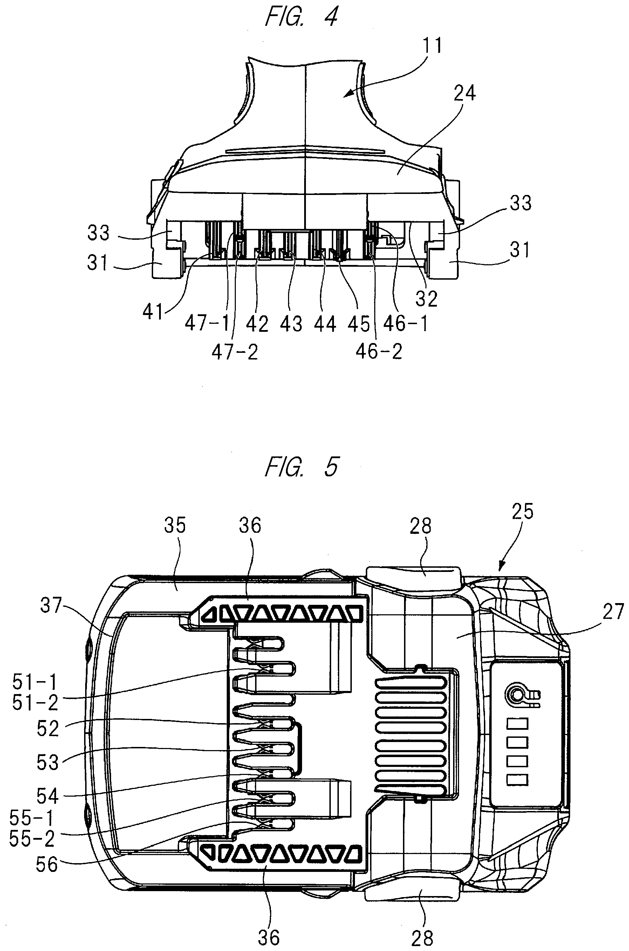

As shown in FIGs. 2 to 4, guide rails 31 are provided on both sides of the battery attachment unit 24. As shown in FIG. 4, each guide rail 31 protrudes below a contact surface 32, and guide grooves 33 are provided inside the guide rails 31. As shown in FIG. 2, a stopper 34 is provided between rear end portions of the left and right guide rails 31, and the attachment completion position of the battery pack 25 is set by the abutment of the battery pack 25 to the stopper 34.

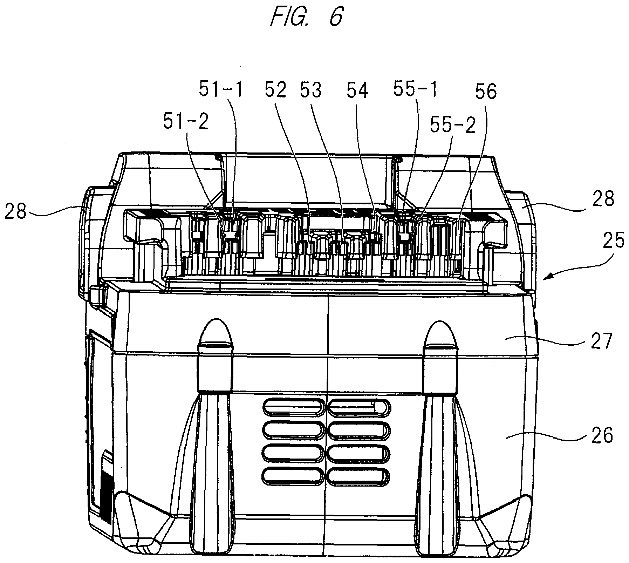

As shown in FIGs. 5 and 6, a contact surface 35 to be in contact with the contact surface 32 of the battery attachment unit 24 is provided on an upper surface of the battery pack 25. Slide rails 36 are provided on both sides of the battery pack 25, and when the battery pack 25 is attached to the battery attachment unit 24, the slide rails 36 enter the guide grooves 33 and are guided and moved along the guide rails 31. In the battery pack 25, a positioning part 37 is provided so as to protrude upward relative to the contact surface 35, and when the battery pack 25 is attached to the battery attachment unit 24, the positioning part 37 abuts to the stopper 34, and the attachment completion position of the battery pack 25 is set.

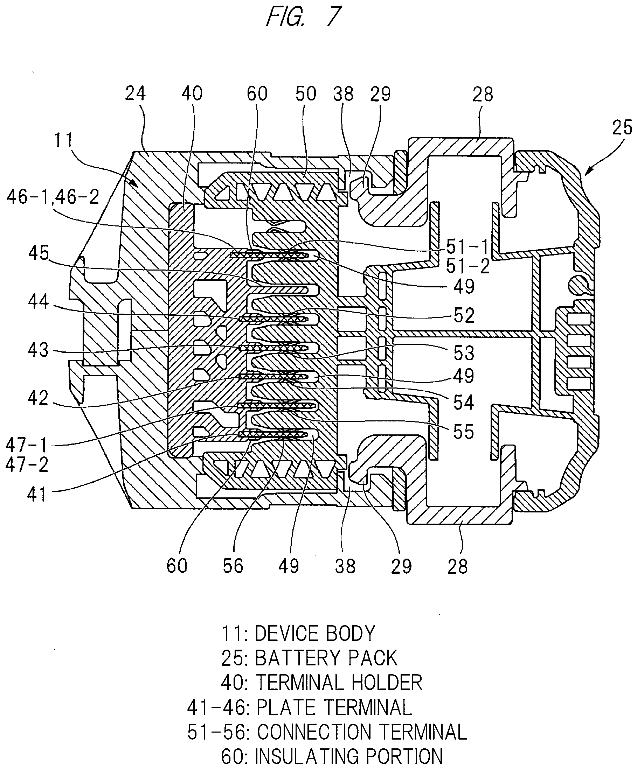

Two push buttons 28 are provided on both sides of the front end portion of the battery pack 25, and the push buttons 28 protrude from the left and right side surfaces of the battery pack 25, respectively. A spring member (not shown) is incorporated between the push buttons 28, and a spring force in the protruding direction is applied to the push buttons 28. Each push button 28 is provided with a ratchet pawl 29 as shown in FIG. 7. As shown in FIG. 2, the guide rails 31 are provided with engaging grooves 38, and when the battery pack 25 is inserted to the attachment completion position of the battery attachment unit 24, the ratchet pawls 29 are engaged with the engaging grooves 38, so that the battery pack 25 is locked to the battery attachment unit 24. When detaching the battery pack 25 from the device body 11, the push buttons 28 are pushed in, and the battery pack 25 is pulled out to the front of the device body 11.

As shown in FIG. 7, a resin terminal holder 40 is attached to the battery attachment unit 24, and the terminal holder 40 extends in a left-right direction of the battery attachment unit 24. A plurality of plate terminals 41 to 44, 46, and 47 as device-side terminals are provided in the terminal holder 40 and each of the plate terminals 41 to 44, 46, and 47 is made of a conductive material, and wiring (not shown) extending in the device body 11 is connected to each of the plate terminals 41 to 44, 46, and 47. The plate terminals 41 to 44, 46, and 47 are arranged in the left-right direction at intervals in the battery attachment unit 24, and protrude from the front surface of the terminal holder 40 toward the front end portion of the battery attachment unit 24.

As shown in FIG. 5 and FIG. 7, a resin terminal block 50 is provided in the attachment/detachment part 27 of the battery pack 25, and slots 49 in which the plate terminals 41 to 44, 46, and 47 are to be inserted are provided in the terminal block 50. FIG. 7 shows a state where the battery pack 25 is attached to the battery attachment unit 24. Width dimensions of the respective slots 49 in the left-right direction are larger than thickness dimensions of the plate terminals 41 to 44, 46, and 47, and there are gaps between the front end surfaces of the plate terminals 41 to 44, 46, and 47 and the bottom surfaces of the slots 49.

In the terminal block 50, connection terminals 51 to 56 to be in contact with the plate terminals 41 to 44, 46, and 47 are provided. The connection terminals 51 to 56 are made of a conductive material, protrude from the left and right side surfaces of the slots 49 toward the inside of the slots 49, and come into contact with the left and right surfaces of the plate terminals 41 to 44, 46, and 47. The connection terminals 51 to 56 are elastically deformed in the protruding direction, and when the plate terminals 41 to 44, 46, to 47 are inserted into the slots 49, the connection terminals 51 to 56 come into contact with the plate terminals 41 to 44, 46, and 47 while applying elastic force thereto.

The plate terminal 46-1 is a device-side terminal for positive electrode, the plate terminal 47-1 is a device-side terminal for negative electrode, and both the plate terminals 46-1 and 47-1 are arranged so as to be separated in the left-right direction of the battery attachment unit 24. The connection terminal 51-1 to be in contact with the plate terminal 46-1 is a battery-side terminal for positive electrode, and the connection terminal 55-1 to be in contact with the plate terminal 47-1 is a battery-side terminal for negative electrode. The connection terminals 51-1 and 55-1 are connected to output terminals of a positive electrode side and a negative electrode side of a battery cell group composed of a plurality of battery cells by wiring (not shown). The plate terminals 46-2 and 47-2 are short circuit terminals, and are arranged side by side with the plate terminals 46-1 and 47-1 in the up-down direction, respectively. Also, the connection terminals 51-2 and 55-2 are connected to output terminals of a positive electrode side and a negative electrode side of a battery cell group composed of a plurality of battery cells by wiring (not shown), and are arranged side by side with the connection terminals 51-1 and 55-1 in the up-down direction, respectively. By connecting the plate terminals 46-2 and 47-2 and the connection terminals 51-2 and 55-2, respectively, the two sets of cell groups housed in the battery pack 25 are connected in series.

The plate terminals 41 to 44 are device-side terminals for communication, and the connection terminals 56, 54, 53, and 52 to be in contact with the respective terminals are battery-side terminals for communication. Respective terminals for communication are an abnormal signal terminal for communicating an abnormal signal from the battery pack 25 to the device body, a temperature sensor terminal for communicating a temperature of the battery cell in the battery pack 25 to the device body, a voltage sensor terminal for communicating an output voltage from the battery pack 25 to the device body, a type-detection sensor terminal for communicating a type of battery to the device body, and the like. The connection terminals 52 to 54 and 56 are connected to an information transmission source such as a sensor provided in the battery pack 25. Information to be sent from the battery pack 25 to the device body is arbitrarily set in accordance with the type of the electric device or the like. A plate portion 45 provided in the terminal block 50 is a dummy terminal.

An insulating portion 60 is provided at a base potion of each of the plate terminals 41 to 46. Each insulating portion 60 is integral with the terminal holder 40, extends from the terminal holder 40 toward the tip of the plate terminal, and covers a part of the plate terminals 41 to 46. The insulating portions 60 are provided so as to cover both the left and right surfaces and the upper and lower surfaces of the base portions of the plate terminals 41 to 46. When the battery pack 25 is attached to the battery attachment unit 24, the insulating portions 60 are inserted into the slots 49 as shown in FIG. 7. The place where the insulating portion 60 is inserted is an opening end of the slot 49 on the rear end side, and the opening end of the slot 49 is covered via a slight gap. In FIG. 7, the gap between the slot 49 and the insulating portion 60 is exaggerated.

When the impact driver 10 is used by supplying the power from the battery pack 25 or when the impact driver 10 is stored, if foreign matters such as metal powder enter and accumulate between the terminal holder 40 and the terminal block 50, there is a possibility that the adjacent plate terminals may be electrically connected by the metal powder or the like.

On the other hand, when the insulating portions 60 are provided to the plate terminals 41 to 46, since the slots 49 are covered with the insulating portions 60, the electrical short circuit between the adjacent plate terminals is suppressed even if a large number of plate terminals are arranged close to each other in the terminal holder 40 with limited dimensions in the left-right direction. By suppressing the short circuit, the reliability and quality of the impact driver 10 as an electric device can be improved.

The insulating portions 60 are provided to all of the plate terminals in the embodiment, but the plate terminal to which the insulating portion 60 is provided may be at least one of the plate terminals 41 to 44 for communication. In that case, the malfunction in the transmission of communication information is to be suppressed. On the other hand, the insulating portion 60 may be provided to only at least one of the plate terminal 46-1 for positive electrode and the plate terminal 47-1 for negative electrode. In that case, the power supply can be stably performed.

The insulating portion 60 is provided integrally with the terminal holder 40 and is formed so as to cover the base portion of the plate terminal when the terminal holder 40 is molded with resin. However, it is also possible to form the insulating portion 60 as a member separate from the terminal holder 40 and then assemble the insulating portion 60 to the plate terminal. When the insulating portion 60 is formed as a separate member, a different type of resin from the terminal holder 40 may be used, and the insulating portion 60 may be formed of rubber. In this case, if the insulating portion 60 is fitted in the slot 49, the short circuit between the terminals can be further suppressed. Note that, even in the configuration in which the insulating portion 60 is provided integrally with the terminal holder 40, the insulating portion 60 may be fitted into the slot 49. Furthermore, the insulating portion 60 formed as a separate member may be provided at the position shifted toward the front end side from the base portion of the plate terminal.

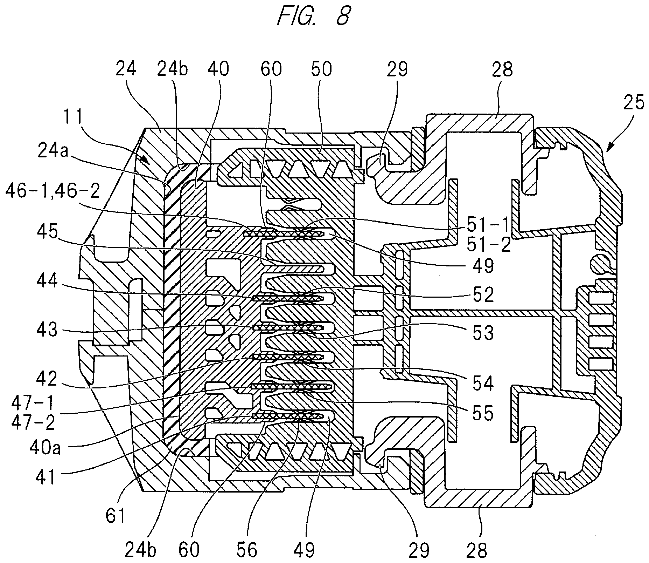

FIG. 8 is a cross-sectional view showing a connection state between the terminals of the battery attachment unit 24 and the terminals of the battery pack 25 according to a modification.

The terminal holder 40 described above is directly attached to the battery attachment unit 24, whereas the terminal holder 40 shown in FIG. 8 is attached to the battery attachment unit 24 via an elastic body 61 such as rubber. The elastic body 61 is disposed between a rear end surface 40a of the terminal holder 40 and an abutment surface 24a of the battery attachment unit 24 parallel to the rear end surface 40a, and extends to the positions between inner surfaces 24b continuous to the abutment surface 24a in the front-rear direction and the terminal holder 40.

When the terminal holder 40 is attached to the battery attachment unit 24 via the elastic body 61 as described above, the terminal holder 40 can move slightly in the front-rear direction and the left-right direction of the battery attachment unit 24, and the elastic force toward the front is applied to the terminal holder 40. Therefore, even if vibration occurs during use of the electric device, the terminal holder 40 and the battery pack 25 (terminal block 50) move in conjunction with each other, so that contact failure (chattering) between the terminals can be suppressed.

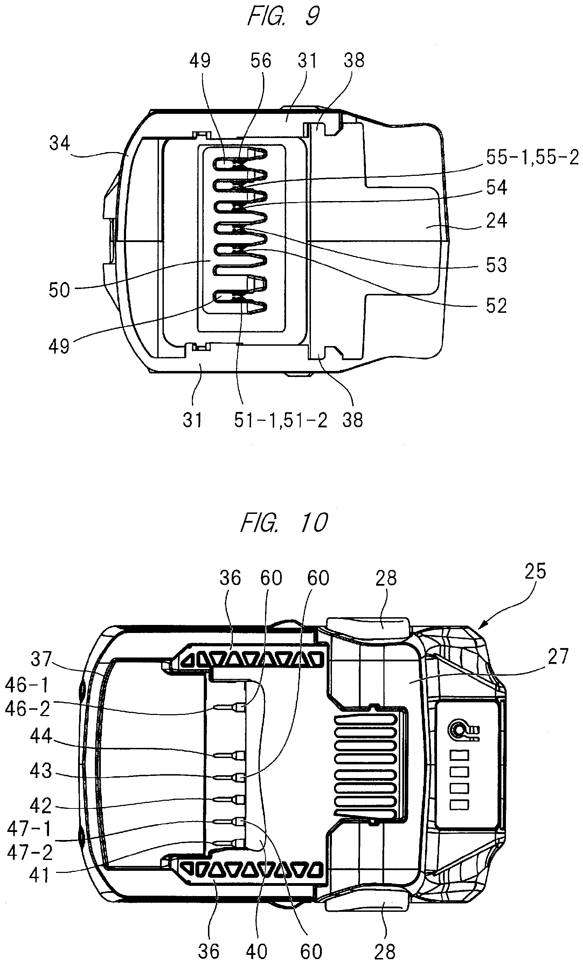

FIG. 9 is a bottom view showing the battery attachment unit 24 according to another embodiment, and FIG. 10 is a plan view showing the battery pack 25 to be attached to the battery attachment unit 24 of FIG. 9.

The terminal block 50 is provided in the battery attachment unit 24, and a plurality of slots 49 are formed in the terminal block 50. The connection terminals 51 to 56 provided in the terminal block 50 so as to protrude into the slots 49 constitute the device-side terminals. On the other hand, the terminal holder 40 is provided in the attachment/detachment part 27 of the battery pack 25, and the plate terminals 41 to 44, 46, and 47 provided in the terminal holder 40 and inserted into the slots 49 constitute the battery-side terminals. The insulating portions 60 are provided at the base portions of the plate terminals 41 to 44, 46, and 47, respectively.

Also in the case shown in FIGs. 9 and 10, the insulating portion 60 can be provided to at least one plate terminal as in the case described above. Further, the plate terminal to which the insulating portion 60 is provided may be at least one of the plate terminals 41 to 44 and 46 for communication. Furthermore, it is also possible to provide the insulating portion 60 only to at least one of the plate terminal 46-1 for positive electrode and the plate terminal 47-1 for negative electrode.

As described above, one of the battery-side terminals and the device-side terminals can be configured as the plate terminals protruding from the terminal holder 40, and the other thereof can be configured as the connection terminals which protrude into the slots 49 in which the plate terminals are inserted and come into contact with the plate terminals.

In the impact driver 10 according to the embodiment described above, the battery pack 25 is attached to the bottom surface of the device body 11, and when the battery pack 25 is attached to the device body 11, the plate terminals 41 to 46 extend in the attaching/detaching direction, that is, the front-rear direction of the battery pack 25 and are arranged at intervals in the left-right direction with respect to the device body 11. On the other hand, in the embodiment in which the battery pack 25 is disposed on the side surface of the device body 11, the plate terminals 41 to 47 are arranged at intervals in the up-down direction or the front-rear direction with respect to the device body 11. The present invention can be applied also to the configuration in which the battery pack 25 is attached or disposed in such a manner.

The present invention is not limited to the above-described embodiments, and various modifications can be made without departing from the scope of the invention. For example, the electric device is not limited to the impact driver shown in FIG. 1, and the present invention can be applied also to a power tool such as a drill, an impact wrench, a circular saw, and the like. Furthermore, the present invention can be applied to any electric device such as a radio, a television, a light, a fan, and the like as long as the device is activated by power from the battery pack attached to the device body.

### REFERENCE SIGNS LIST

10... impact driver, 11... device body, 12... housing, 14... trigger, 15... electric motor, 24... battery attachment unit, 24a... abutment surface, 24b... inner surface, 25... battery pack, 26... battery pack body, 27...attachment/detachment part, 28... push button, 29... ratchet pawl, 31... guide rail, 32... contact surface, 33... guide groove, 34... stopper, 35... contact surface, 36... slide rail, 37... positioning part, 38... engaging groove, 40... terminal holder, 40a... rear end surface, 41-44, 46, 47... plate terminal, 49... slot, 50... terminal block, 51-56... connection terminal, 60... insulating portion, 61... elastic body

## Claims

1. An electric device including a battery pack in which a plurality of battery-side terminals are provided and a device body in which a plurality of device-side terminals connected to the battery-side terminals are provided and to which the battery pack is detachably attached,
**characterized in that** one of the battery-side terminals and the device-side terminals are plate terminals protruding from a terminal holder,
the other of the battery-side terminals and the device-side terminals are connection terminals which protrude into slots in which the plate terminals are inserted and come into contact with the plate terminals, and
an insulating portion extending from the terminal holder toward a tip of the plate terminal and inserted into the slot is provided to at least one of the plate terminals.

2. The electric device according to claim 1,
**characterized in that** the insulating portion is provided at a base portion of the plate terminal.

3. The electric device according to claim 1,
**characterized in that** the plate terminals include plate terminals for positive electrode and negative electrode configured to supply power of the battery pack to the device body and a plurality of plate terminals for communication configured to communicate information of the battery pack to the electric device, and
the insulating portion which covers a part of at least one of the plate terminals for communication is provided so as to extend from the terminal holder.

4. The electric device according to any one of claims 1 to 3,
**characterized in that** when a direction in which the battery pack is attached to the device body is defined as a front-rear direction, the plurality of plate terminals are arranged in a left-right direction of the device body.

5. The electric device according to any one of claims 1 to 3,
**characterized in that** when a direction in which the battery pack is attached to the device body is defined as a front-rear direction, the plurality of plate terminals are arranged in an up-down direction of the device body.

6. The electric device according to claim 1,
**characterized in that** the plate terminals include plate terminals for positive electrode and negative electrode configured to supply power of the battery pack to the device body and a plurality of plate terminals for communication configured to communicate information of the battery pack to the electric device, and
the insulating portion which covers a part of at least one of the plate terminals for positive electrode and negative electrode is provided so as to extend from the terminal holder.

7. The electric device according to claim 6,
**characterized in that** the insulating portion which covers a part of at least one of the plate terminals for communication is provided so as to extend from the terminal holder.

8. The electric device according to any one of claims 3 to 6,
**characterized in that** the insulating portion covers a base portion of the plate terminal and is inserted into the slot in which the plate terminal is inserted.

9. The electric device according to any one of claims 1 to 8,
**characterized in that** the insulating portion is provided to all of the plate terminals provided in the terminal holder.
